# EUROPÄISCHE PATENTSCHRIFT

(11) **EP 1 634 905 B1**
(45) Veröffentlichungstag und Bekanntmachung des Hinweises auf die Patenterteilung: **12.03.2014**
(21) Anmeldenummer: 05018556.0
(22) Anmeldetag: 26.08.2005
(51) Int. Cl.: C08G 18/81, C09D 175/16

(54) **Abspalterfrei-härtende blockierte Polyisocyanate für Dual Cure Systeme**
Emission free blocked polyisocyanates for Dual Cure systems
Polyisocyanates blocquées sans émission pour des sytèmes Dual Cure

(30) Priorität: 08.09.2004 DE 102004043363
(43) Veröffentlichungstag der Anmeldung: 15.03.2006
(73) Patentinhaber: Allnex IP S.à.r.l., 1660 Luxembourg (LU)
(72) Erfinder: Fäcke, Thomas, Dr., Bridgeville PA 15017 (US); Weikard, Jan, Dr., 51519 Odenthal (DE); Fischer, Wolfgang, Dr., 40668 Meerbusch (DE)
(74) Vertreter: Destryker, Elise Martine

(56) Entgegenhaltungen:
- DE-A- 10 260 269
- US-A- 4 961 960
- DATABASE WPI Week 199518 Derwent Publications Ltd., London, GB; AN 1995-136887 XP002359054 "Soft polyurethane foam car part" & JP 07 062051 A (POLYURETHANE KASEI) 7. März 1995 (1995-03-07)

## Beschreibung

Die Erfindung betrifft neuartige blockierte Polyisocyanate, deren Vernetzung thermisch und photochemisch initiiert wird, ein Verfahren zu ihrer Herstellung sowie ihre Verwendung in Bindemitteln.

Beschichtungsmittel, die durch zwei unabhängige Prozesse aushärten, werden allgemein als Dual Cure-Systeme bezeichnet. Üblicherweise besitzen die enthaltenen Bindemittelkomponenten dabei unterschiedliche funktionelle Gruppen, die unter geeigneten Bedingungen in der Regeln unabhängig voneinander miteinander reagieren und dabei vernetzen. Übliche zum Stand der Technik gehörende Dual Cure-Systeme besitzen strahlen- sowie thermisch-härtende Gruppen, wobei besonders vorteilhafte Eigenschaften bei Verwendung von Isocyanat- und Hydroxygruppen als thermisch vernetzende Funktionen erhalten werden.

EP-A 0 928 800 beschreibt ein Dual Cure-System, das einen Vernetzer enthält, der sowohl strahlenhärtende Acrylatgruppen als auch freie Isocyanatgruppen enthält, die mit geeigneten, z.B. OH-gruppenhaltigen Bindemitteln thermisch ausgehärtet werden können. Da NCO- und OH-Gruppen bereits bei Raumtemperatur miteinander reagieren, kann das vorgenannte Beschichtungssystem nur als zwei Komponentensystem gehandhabt werden, bei dem NCO-haltige und NCO-reaktive Bestandteile kurz vor oder beim Beschichtungsvorgang miteinander vermischt werden. Der Nachteil einer nur sehr kurzen Verarbeitungszeit dieser Systeme kann durch Blockierung der freien NCO-Gruppen beseitigt werden. Die Kombination solcher strahlen- und hitzehärtenden Systeme, die blockierte Isocyanatgruppen enthalten, ist beispielsweise in EP-A-126 359, WO-A 01/42329 oder US-A 4 961 960 beschrieben.

DE-A 102 60 269 beschreibt Dual-Cure Systeme, die blockierten acrylatgruppenhaltigen Polyisocyanaten enthalten wobei als Blockierungsmittel CH-azide cyclische Ketone eingesetzt werden.

Bei den meisten zum Stand der Technik gehörenden blockierten Polyisocyanaten werden die enthaltenen Blockierungsmittel bei der Vernetzungsreaktion abgespalten und anschließend freigesetzt. Dies wirkt sich einerseits negativ auf den VOC-Gehalt der Beschichtungssysteme aus, andererseits verbleibt abgespaltenes Blockierungsmittel im Lackfilm, wodurch die Eigenschaften der Beschichtung negativ beeinflusst werden. Daher sind Kratzfestigkeit und Säurestabilität von Einkomponenten-(1K)-Lackfilmen in der Regel deutlich schlechter als bei Zweikomponenten-(2K)-Polyurethan Lackierungen (z.B. T. Engbert, E. König, E. Jürgens, Farbe & Lack, Curt R. Vincentz Verlag, Hannover 10/1995). Die Abspaltung des Blockierungsmittels und dessen gasförmiges Entweichen aus dem Lackfilm kann darüber hinaus zur Blasenbildung im Lack führen. Gegebenenfalls kann eine Nachverbrennung des emittierten Blockierungsmittels notwendig werden.

Für besonders niedrige Vernetzungstemperaturen im Bereich von 90 bis 120°C finden neuerdings Malonsäuredieethylester blockierte Isocyanate Verwendung (z.B. EP-A 0 947 531). Im Gegensatz zu Blockierungen mit z.B. N-heterocyclischen Verbindungen, wie Caprolactam oder Butanonoxim, wird hierbei nicht das Blockierungsmittel vollständig abgespalten, sondern es kommt beim Aushärten zu einer Umesterung am Malonsäurediethylester unter Abspaltung von Ethanol. Nachteilig ist allerdings, dass solche Systeme aufgrund der labilen Esterbindung äußerst anfällig gegen Säureeinwirkung sind, so dass die Anwendungsmöglichkeiten dieser Produkte eingeschränkt sind.

Der vorliegenden Erfindung lag daher die Aufgabe zugrunde, neue blockierte Polyisocyanate bereitzustellen, die sowohl thermisch als auch photochemisch aushärten und dieser Prozess gleichzeitig emissionsfrei verläuft.

Es konnte nun gefunden werden, dass die gestellte Aufgabe durch Polyisocyanate gelöst werden kann, deren NCO-Gruppen ganz oder teilweise thermisch reversibel blockiert sind und die im Blockierungsmittel und gegebenenfalls im Polymergerüst mindestens eine unter Einwirkung aktinischer Strahlung mit ethylenisch ungesättigten Verbindungen unter Polymerisation reagierende Gruppe (strahlenhärtende Gruppe) aufweisen.

Als unter Einwirkung aktinischer Strahlung mit ethylenisch ungesättigten Verbindungen unter Polymerisation reagierende Gruppen (strahlenhärtende Gruppen) werden bevorzugt Allyl-, Vinyl-, Acryl-, Methacryl-, Maleinoyl-, Fumarylgruppen, besonders bevorzugt Maleinoyl-, Fumaryl-, Acryl-, Methacrylgruppen verstanden. Ganz besonders bevorzugte strahlenhärtende Gruppen sind Acryl- und Methacrylgruppen, die im folgenden auch vereinfacht als (Meth)acrylgruppen bezeichnet werden.

Unter aktinischer Strahlung wird elektromagnetische, ionisierende Strahlung verstanden, insbesondere Elektronenstrahlen, UV-Strahlen sowie sichtbares Licht (Roche Lexikon Medizin, 4.Auflage; Urban & Fischer Verlag, München 1999).

Unter NCO-Gruppen, die thermisch reversibel blockiert sind, werden NCO-Gruppen verstanden, die durch Umsetzung mit einem geeigneten Blockierungsmittel blockiert/desaktiviert worden sind und die durch Einfluss von Temperaturen von 40 -200°C dieses Blockierungsmittel ganz oder teilweise wieder abspalten, so dass reaktive Gruppen insbesondere freie NCO-Gruppen resultieren, die mit isocyanatreaktiven Gruppen reagieren.

Gegenstand der Erfindung sind Polyisocyanate, die
A) ggf. eine oder mehrere unter Einwirkung aktinischer Strahlung mit ethylenisch ungesättigten Verbindungen unter Polymerisation reagierende Gruppe (strahlenhärtende Gruppe) aufweisen und
B) mindestens eine thermisch reversibel blockierte NCO-Gruppe aufweisen, deren Blockierungsmittel mindestens eine unter Einwirkung aktinischer Strahlung mit ethylenisch ungesättigten Verbindungen unter Polymerisation reagierende Gruppe (strahlenhärtende Gruppe) aufweist.

Ein weiterer Gegenstand der Erfindung ist ein Verfahren zur Herstellung der erfindungsgemäßen Polyisocyanate, bei dem
A1) ein oder mehrere organische Polyisocyanate mit
A2) ggf. einer oder mehreren Verbindungen, die mindestens eine isocyanatreaktive Gruppe aufweisen und mindestens eine unter Einwirkung aktinischer Strahlung mit ethylenisch ungesättigten Verbindungen unter Polymerisation reagierende Gruppe (strahlenhärtende Gruppe) enthalten,
A3) ggf. weiteren von den Verbindungen der Komponente A2) verschiedenen isocyanat-reaktiven Verbindungen und
A4) einer Blockierungsmittelkomponente, die wenigstens ein Blockierungsmittel enthält, dass NCO-Gruppen thermisch reversibel blockiert und gleichzeitig mindestens eine unter Einwirkung aktinischer Strahlung mit ethylenisch ungesättigten Verbindungen unter Polymerisation reagierende Gruppe (strahlenhärtende Gruppe) aufweist
A5) ggf. in Anwesenheit eines oder mehrerer Katalysatoren und
A6) ggf. Lösemitteln, Reaktivverdünnern und/oder Hilfs- und Zusatzstoffen
miteinander umgesetzt werden.

Unter isocyanatreaktiven Gruppen im Sinne der Erfindung werden alle Funktionalitäten verstanden, die mit NCO-Funktionen bei Temperaturen von 0 bis 200°C ggf. unter Beschleunigung mit dem Fachmann aus der Polyurethanchemie bekannten Katalysatoren reagieren. Beispielsweise sind dies: Hydroxyl-, Amino-, Asparaginato-, Thiolgruppen und auch solche Systeme, die β -Aminoalkohole enthalten, wie z.B. Tetrakishydroxyethylen-ethylendiamin oder auch Dialkylaminoethanol oder Aminoethanol. Bevorzugt sind Hydroxylgruppen.

Zur Herstellung der erfindungsgemäßen Polyisocyanate können als Komponente A1) alle organischen isocyanatgruppenaufweisenden Verbindungen, bevorzugt aliphatische, cycloaliphatische, aromatische oder heterocyclische Polyisocyanate einer NCO-Funktionalität ≥ 2, einzeln oder in beliebigen Mischungen untereinander verwendet werden, wobei es unerheblich ist, ob diese durch Phosgenierung oder nach phosgenfreien Verfahren hergestellt wurden.

Ebenfalls gut geeignet sind Polyisocyanate mit Uretdion-, Carbodiimid-, Isocyanurat-, Iminooxadiazindion-, Biuret-, Urethan-, Allophanat-, Oxadiazintrion oder Acylharnstoff-Strukur sowie Polyisocyanatprepolymere einer mittleren NCO-Funktionalität > 1, wie sie werden durch Vorreaktion eines molaren Überschusses eines der obengenannten Polyisocyanate in an sich bekannter Art und Weise erhalten werden können.

Im Sinne der Erfindung werden in A1) bevorzugt Verbindungen der vorstehend genannten Art mit einem Molekulargewicht von 140 bis 4000 g/mol mit aliphatisch, cycloaliphatisch, araliphatisch und/oder aromatisch gebundenen Isocyanatgruppen eingesetzt.

Beispiele für aliphatische und cycloaliphatische Isocyanate der Komponente A1) sind 1,4-Diisocyanatobutan, 1,5-Diisocyanatopentan, 1,6-Diisocyanatohexan (HDI), 2-Methyl-1,5-diisocyanatopentan, 1,5-Diisocyanato-2,2-dimethylpentan, 2,2,4- bzw. 2,4,4-Trimethyl-1,6-diisocyanatohexan, 1,10-Diisocyanatodecan, 1,3- und 1,4-Diisocyanatocyclohexan, 1,3- und 1,4-Bis-(isocyanatomethyl)-cyclohexan, 1-Isocyanato-3,3,5-trimethyl-5-isocyanatomethylcyclohexan (Isophorondiisocyanat, IPDI), 4,4'-Diisocyanatodicyclohexylmethan (Desmodur® W, Bayer AG, Leverkusen), 4-Isocyanatomethyl-1,8-octandiisocyanat (Triisocyanatononan, TIN), ω ,ω'-Diisocyanato-1,3-dimethylcyclohexan (H₆XDI), 1-Isocyanato-1-methyl-3-isocyanato-methylcyclohexan, 1-Isocyanato-1-methyl-4-isocyanato-methylcyclohexan, Bis-(isocyanatomethyl)-norbornan verwendet werden.

Beispiele für aromatische Isocyanate der Komponente A1) sind 1,5-Naphthalendiisocyanat, 1,3-und 1,4-Bis-(2-isocyanato-prop-2-yl)-benzol (TMXDI), 2,4- und 2,6-Diisocyanatotoluol (TDI) insbesondere das 2,4 und das 2,6-Isomere und technische Gemische der beiden Isomeren, 2,4'- und 4,4'-Diisocyanatodiphenylmethan (MDI), 1,5-Diisocyanatonaphthalin, 1,3-Bis(isocyanatomethyl)benzol (XDI) eingesetzt werden.

Besonders bevorzugt werden in Komponente A1) Polyisocyanate oder Polyisocyanatgemische der genannten Art mit ausschließlich aliphatisch und/oder cycloaliphatisch gebundenen Isocyanatgruppen eingesetzt, insbesondere auf Basis von Hexamethylendiisocyanat (HDI), Isophorondiisocyanat (IPDI) und/oder 4,4'-Diisocyanatodicyclohexylmethan.

In Komponente A2) können alle Verbindungen einzeln oder in beliebigen Mischungen verwendet werden, die mindestens eine gegenüber Isocyanaten reaktive Gruppe und mindestens eine ungesättigte Funktion aufweisen, die unter Einwirkung aktinischer Strahlung mit ethylenisch ungesättigten Verbindungen unter Polymerisation reagiert.

Bevorzugt werden als Verbindungen der Komponente A2) α,β-ungesättigte Carbonsäurederivate wie Acrylate, Methacrylate, Maleinate, Fumarate, Maleimide, Acrylamide, sowie Vinylether, Propenylether, Allylether und Dicyclopentadienyl-Einheiten enthaltende Verbindungen, die mindestens eine gegenüber Isocyanaten reaktive Gruppe aufweisen, eingesetzt, besonders bevorzugt sind dies Acrylate und Methacrylate mit mindestens einer isocyanatreaktiven Gruppe.

Beispiele für Verbindungen der Komponente A2) sind 3-Isocyanatopropylmethacrylat, Teilumsetzungsprodukte von Polyisocyanaten mit hydroxyfunktionellen Acrylaten oder Methacrylaten zu Verbindungen mit Urethan und/oder Allophanatstruktureinheiten wie sie beispielsweise in DE-OS 28 09 715 (insbesondere Beispiele Addukte P, Q, R und S), EP-A 126 359 (insbesondere Beispiele 1 bis 3), US-A 6 465 539 (Seite 2, Zeile 20 bis Seite 4, Zeile 55, sowie insbesondere die Beispielverbindungen F und G) und DE-A-198 60 041 (insbesondere Beispiele 1 bis 10, 12 sowie V1 bis V4) |beschrieben werden.

Als hydroxyfunktionelle Acrylate oder Methacrylate kommen Verbindungen in Betracht wie 2-Hydroxyethyl(meth)acrylat, Polyethylenoxid-mono(meth)acrylate, Polypropylenoxidmono(meth)-acrylate, Polyalkylenoxidmono(meth)acrylate, Poly(ε-caprolacton)mono(meth)acrylate, wie z.B. Tone® M100 (Dow, Schwalbach, DE), 2-Hydroxypropyl(meth)acrylat, 4-Hydroxybutyl(meth)-acrylat, 3-Hydroxy-2,2-dimethylpropyl(meth)acrylat, die hydroxyfunktionellen Mono-, Di- oder Tetraacrylate mehrwertiger Alkohole wie Trimethylolpropan, Glycerin, Pentaerythrit, Dipentaerythrit, ethoxyliertes, propoxyliertes oder alkoxyliertes Trimethylolpropan, Glycerin, Pentaerythrit, Dipentaerythrit oder deren technische Gemische. Geeignet sind auch Alkohole, die sich aus der Umsetzung von doppelbindungshaltigen Säuren mit gegebenenfalls doppelbindungshaltigen, monomeren Epoxidverbindungen erhalten lassen, so zum z.B. die Umsetzungsprodukte von (Meth)acrylsäure mit Glycidyl(meth)acrylat oder dem Glycidylester der Versaticsäure (Cardura® E10, Resolution Nederland BV, NL).

Als Komponente A3) können beispielsweise hydrophilierend wirkende Verbindungen mit mindestens einer isocyanatreaktiven Gruppe einzeln oder als Mischung eingesetzt werden. Hydrophilierend wirkende Verbindungen werden insbesondere dann eingesetzt, wenn das erfindungsgemäße Polyisocyanat in Wasser oder wasserhaltigen Mischungen gelöst oder dispergiert werden soll.

Unter hydrophilierend wirkenden Verbindungen werden alle ionisch, potentiell ionisch und nicht ionisch hydrophilierenden Verbindungen mit mindestens einer gegenüber Isocyanaten reaktiven Gruppe verstanden. Diese Verbindungen weisen als isocyanatreaktive Gruppen bevorzugt Hydroxy- und/oder Aminofunktionen auf.

Unter potentiell ionisch hydrophilierend werden solche Verbindungen verstanden, die bei Wechselwirkung mit wässrigen Medien ein ggf. pH-Wert-abhängiges Dissoziationsgleichgewicht eingehen und auf diese Weise negativ, positiv oder neutral geladen sind.

Als ionisch oder potentiell ionisch hydrophilierende Verbindungen der Komponente A3) werden bevorzugt Verbindungen eingesetzt, die mindestens eine isocyanatreaktive Gruppe sowie mindestens eine Funktionalität, wie z.B. -COOY, -SO₃Y, -PO(OY)₂ (Y = H, NH₄⁺, Metallkation), -NR₂, -NR₃⁺, -PR₃⁺ (R = H, Alkyl, Aryl), aufweisen.

Geeignete ionisch oder potentiell ionisch hydrophilierende Verbindungen sind z.B. Mono- und Dihydroxycarbonsäuren, Mono- und Diaminocarbonsäuren, Mono- und Dihydroxysulfonsäuren, Mono- und Diaminosulfonsäuren sowie Mono- und Dihydroxyphosphonsäuren oder Mono- und Diaminophosphonsäuren und ihre Salze wie Dimethylolpropionsäure, Dimethylolbuttersäure, Hydroxypivalinsäure, N-(2-Aminoethyl)-β-alanin, 2-(2-Amino-ethylamino)-ethansulfonsäure, Ethylendiamin-propyl- oder butylsulfonsäure, 1,2- oder 1,3-Propylendiamin-β-ethylsulfonsäure, Äpfelsäure, Zitronensäure, Glykolsäure, Milchsäure, Glycin, Alanin, Taurin, Lysin, 3,5-Diaminobenzoesäure, ein Additionsprodukt von IPDI und Acrylsäure (EP-A 0 916 647, Beispiel 1) und dessen Alkali- und/oder Ammoniumsalze; das Addukt von Natriumbisulfit an Buten-2-diol-1,4, Polyethersulfonat, das propoxylierte Addukt aus 2-Butendiol und NaHSO₃, z.B. beschrieben in der DE-A 2 446 440 (Seite 5-9, Formel I-III) sowie in kationische Gruppen überführbare Bausteine wie N-Methyl-diethanolamin als hydrophile Aufbaukomponenten. Bevorzugte ionisch oder potentielle ionisch hydrophilierende Verbindungen sind solche, die über Carboxy- oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, der 2-(2-Amino-ethylamino-)ethansulfonsäure oder des Additionsproduktes von IPDI und Acrylsäure (EP-A 0 916 647, Beispiel 1) sowie der Dimethylolpropionsäure.

Als hydrophile nichtionische Verbindungen können Verbindungen mit Polyetherstruktur, bevorzugt Alkylenoxid-basierende Polyether eingesetzt, die mindestens eine Hydroxy- oder Aminogruppe als isocyanatreaktive Gruppe enthalten.

Diese Verbindungen mit Polyetherstruktur können beispielsweise einwertige, im statistischen Mittel 5 bis 70, bevorzugt 7 bis 55 Ethylenoxideinheiten pro Molekül aufweisende Polyalkylenoxidpolyetheralkohole mit mindestens 30 mol-% Ethylenoxid sein, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38).

Geeignete Startermoleküle sind beispielsweise gesättigte Monoalkohole wie Methanol, Ethanol, n-Propanol, Isopropanol, n-Butanol, Isobutanol, sec-Butanol, die Isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan oder Tetrahydrofurfurylalkohol, Diethylenglykol-monoalkylether wie beispielsweise Diethylenglykolmonobutylether, ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol, sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol. Bevorzugte Startermoleküle sind gesättigte Monoalkohole. Besonders bevorzugt wird Diethylenglykolmonobutylether als Startermolekül verwendet.

Für die Alkoxylierungsreaktion geeignete Alkylenoxide sind insbesondere Ethylenoxid und Propylenoxid, die in beliebiger Reihenfolge getrennt voneinander oder im Gemisch bei der Alkoxylierungsreaktion eingesetzt werden können, so dass Block- oder Mischpolyether erhalten werden.

Bevorzugt handelt es sich bei den Verbindungen mit Polyetherstruktur um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen.

Ganz besonders bevorzugt sind monofunktionelle gemischte Polyalkylenoxidpolyether, die mindestens 40 mol-% Ethylenoxid- und maximal 60 mol-% Propylenoxideinheiten aufweisen.

Des Weiteren können als Verbindungen der Komponente A3) niedermolekulare Mono-, Di- oder Polyole wie kurzkettige, d.h. 2 bis 20 Kohlenstoffatome enthaltende, aliphatische, araliphatische oder cycloaliphatische Monoalkohole, Diole oder Triole eingesetzt werden. Beispiele für Monoalkohole sind Methanol, Ethanol, die isomeren Propanole, Butanole, Pentanole, weiterhin Diacetonalkohol, Fettalkohole oder fluorierte Alkohole wie sie z.B. unter dem Namen Zonyl® von der Firma DuPont erhältlich sind. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Bevorzugt sind die Alkohole 1,4-Butandiol, 1,4-Cyclohexandimethanol, 1,6-Hexandiol und Trimethylolpropan.

Wenn überhaupt werden genannte Mono-, Di- oder Triole bevorzugt nur in Mengen < 0,3 insbesondere < 0,1 Equivalente pro Equivalent Isocyanatgruppen verwendet. Besonders bevorzugt wir auf die Verwendung dieser Mono-, Di- oder Triole verzichtet.

Als Blockierungsmittel der Komponente A4) können grundsätzlich alle Substanzen verwendet werden, die sowohl eine unter Einwirkung aktinischer Strahlung mit ethylenisch ungesättigten Verbindungen unter Polymerisation reagierende Gruppe enthalten sowie ein durch Lewis Säuren und oder Brönstedt Basen aktivierbares bzw. abstrahierbares Proton besitzen.

Bevorzugt sind dies Acrylamide wie N-Alkyl-(meth)acrylamid, N-Alkyloxy-(meth)acrylamid, N-Arylalkyloxy-(meth)acrylamid, N-Aryloxy-(meth)acrylamid, Maleinimide, wie N-Acetoacetyl-(meth)acrylamid, Acetessigsäure-(Meth)acryloyloxyalkylester, Cyanessigsäure-(Meth)acryloyloxyalkylester und Malonsäure-(meth)acryloyloxyalkyldiester, wie z. B. Acetessigsäure-(meth)-acryl-oyloxyethylester, Acetessigsäure-(meth)acryloyloxypropylester, Acetessigsäure-(meth)-acryloyloxybutylester.

Besonders bevorzugt sind Acetessigsäure-(meth)acryloyl-oxyethylester, Acetessigsäure-(meth)-acryloyloxypropylester, Acet-essigsäure-(meth)acryloyloxybutylester.

Ganz besonders bevorzugt ist Acetessigsäure-methacryloyloxyethylester.

Selbstverständlich können in Komponente A4) die genannten ethylenisch ungesättigten Blockierungsmittel sowohl in Mischungen untereinander als auch in beliebigen Mischungen mit weiteren von den genannten Verbindungen der Komponente A4) verschiedenen Blockierungsmitteln eingesetzt werden, die keine unter Einwirkung aktinischer Strahlung mit ethylenisch ungesättigten Verbindungen unter Polymerisation reagierende Gruppe enthalten. Hierzu geeignete weitere Blockierungsmittel sind beispielsweise Alkohole, Lactame, Oxime, Malonester, Alkylacetoacetate, Triazole, Phenole, Imidazole, Pyrazole sowie Amine, wie z.B. Butanonoxim, Diisopropylamin, 1,2,4-Triazol, Dimethyl-1,2,4-triazol, Imidazol, Malonsäurediethylester, Acetessigester, Acetonoxim, 3,5-Dimethylpyrazol, ε-Caprolactam, N-Methyl-, N-Ethyl-, N-(Iso)propyl-, N-n-Butyl-, N-iso-Butyl-, N-tert.-Butyl-benzylamin oder 1,1-Dimethylbenzylamin, N-Alkyl-N-1,1-Dimethylmethylphenylamin, Addukte von Benzylamin an Verbindungen mit aktivierten Doppelbindungen wie Malonsäureestern, N,N-Dimethylaminopropylbenrylamin und andere tertiäre Aminogruppen enthaltende gegebenenfalls substituierte Benzylamine und/oder Dibenzylamin oder beliebige Gemische dieser Blockierungsmittel.

Falls überhaupt mitverwendet, beträgt der Anteil dieser weiteren Blockierungsmittel der Komponente A4) höchstens 30 Gew.-%, bevorzugt höchstens 20 Gew.-%, ganz besonders bevorzugt weniger als 10 Gew.-% der gesamten Komponente A4).

Bevorzugt werden ausschließlich Blockierungsmittel in Komponente A4) eingesetzt, die jeweils mindestens eine ungesättigte Funktion aufweisen, die unter Einwirkung aktinischer Strahlung mit ethylenisch ungesättigten Verbindungen unter Polymerisation reagiert.

Das Verhältnis der zu blockierenden Isocyanatgruppen zu den zur Blockierungsreaktion befähigten funktionellen Gruppen der Blockierungsmittelkomponnete A4) beträgt 0,8 bis 1,2 mol, bevorzugt 1:1.

Von NCO-Gruppen aus A1) werden üblicherweise weniger als 90 mol-%, bevorzugt weniger als 60 mol% mit den NCO-reaktiven Gruppen aus A2) und A3) umgesetzt.

Der Gehalt freier NCO-Gruppen in den erfindungsgemäßen Polyisocyanaten ist < 5 Gew.-%, bevorzugt < 0,5 Gew.-%, insbesondere < 0,1 Gew.-%.

Als Verbindungen der Komponente A5) können alle dem Fachmann für die Katalyse der NCO-Blockierung bekannte Verbindungen einzeln oder in beliebigen Mischungen verwendet werden. Bevorzugt sind Alkali- und Erdalkalimetallbasen, wie z.B. gepulvertes Natriumcarbonat (Soda) oder Trinatriumphosphat, die Metallsalze der zweiten Nebengruppe, insbesondere des Zinks, sowie tertiäre Amine wie 1,4-Diaza-bicyclo(2,2,2)octane (DABCO), Tetramethylguanidin (TMG), 1,5-Diazabicyclo(4,3,0)non-5-en (DBN), 1,8-Diazabicyclo(5,4,0)undec-7-en (DBU) oder Phosphine wie Tributylphosphin sein.

Bevorzugt werden in Komponente A5) Natriumcarbonat, Kaliumcarbonat oder Zinksalze insbesondere Zink-2-ethylhexanoat verwendet.

Die Komponente A5) wird in einer Menge von 0,05 bis 10 Gew.-%, bevorzugt 0,1 bis 3 Gew.-%, insbesondere 0,2 bis 1 Gew.-% bezogen auf die Summe der Komponente A1) bis A4) im erfindungsgemäßen Verfahren verwendet.

In der gegebenenfalls zu verwendenden Komponente A6) können alle dem Fachmann aus der Polyurethanchemie und der Chemie ethylenisch ungesättigter Beschichtungsstoffe bekannten Hilfs- und Zusatzstoffe oder deren Gemische enthalten sein. Bevorzugt ist die Verwendung von Stabilisatoren zur Vermeidung vorzeitiger Polymerisation in einer Menge von 0,01 - 1 Gew.-%, bevorzugt 0,1 - 0,5 Gew. -% bezogen auf die Menge der ungesättigten Gruppen. Solche Inhibitoren sind beispielsweise in Houben-Weyl, Methoden der organischen Chemie, 4. Auflage, Band XIV/1, Georg Thieme Verlag, Stuttgart 1961, Seite 433 ff. beschrieben. Als Beispiele seien genannt: Natriumdithionit, Natriumhydrogensulfid, Schwefel, Hydrazin, Phenylhydrazin, Hydrazobenzol, N-Phenyl-β-naphthylamin, N-Phenyl-ethanoldiamin, Dinitrobenzol, Picrinsäure, p-Nitrosodimethylanilin, Diphenylnitrosamin, Phenole, wie para-Methoxyphenol, 2,5-Di-tert.-Butyl-hydrochinon, 2,6-Di-tert.-butyl-4-methylphenol, p-tert-Butyl-brenzcatechin oder 2,5-Di-tert.-amyl-hydrochinon, Tetramethyl-thiuramdisulfid, 2-Mercaptobenzthiazol, Dimethyl-dithiocarbaminsäurenatriumsalz, Phenothiazin, N-Oxyl-Verbindungen wie z.B. 2,2,6,6-Tetramethylpiperidin-N-Oxid (TEMPO) oder eines seiner Derivate. Ebenso können die Stabilisatoren auch chemisch eingebaut werden, dabei eignen sich Verbindungen der oben genannten Klassen insbesondere, wenn sie noch weitere freie aliphatische Alkoholgruppen oder primäre oder sekundäre Amingruppen tragen und damit dann über Urethan- oder Harnstoff-Gruppen chemisch gebunden Stabilisatoren darstellen. Hierfür besonders geeignet sind 2,2,6,6-Tetramethyl-4-hydroxy-piperidin-N-oxid. Weiterhin wird in einer bevorzugten Variante ein sauerstoffhaltiges Gas, vorzugsweise Luft, während der Herstellung der erfindungsgemäßen Polyisocyanate eingeleitet.

Die Herstellung der erfindungsgemäßen Polyisocyanate kann in Substanz oder aber in Gegenwart geeigneter Lösungsmittel oder Reaktivverdünner erfolgen. Geeignete Lösungsmittel sind die üblichen Lacklösungsmittel, wie z.B. Butylacetat, Methoxyproylacetat oder Solventnaphtha der Fa. Exxon-Chemie, Köln, DE als aromatenhaltiges Lösungsmittel sowie Gemische der genannten Lösungsmittel. Bevorzugt wird die Blockierung in den genannten Lösungsmitteln vorgenommen, wobei der einzustellende Festkörpergehalt zwischen 10 und 90 % beträgt.

Geeignete Reaktivverdünner sind beispielsweise die in der Technologie der Strahlenhärtung bekannten Verbindungen(vgl. Römpp Lexikon Chemie, S.491, 10. Aufl. 1998, Georg-Thieme-Verlag, Stuttgart), insbesondere solche mit geringen Hydroxylgehalten unter 30, bevorzugt unter 10 mg KOH/g. Beispielhaft seien die Ester der Acrylsäure oder Methacrylsäure erwähnt, bevorzugt der Acrylsäure, der folgenden Alkohole: isomere Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Die Herstellung der erfindungsgemäßen Polyisocyanate wird bevorzugt in einem Temperaturbereich von 25 bis 180°C, besonders bevorzugt von 30 bis 90°C durchgeführt. In einer bevorzugten Ausführungsform der Erfindung wird so vorgegangen, dass Komponente A1) vorgelegt wird und bei Temperaturen von 30 bis 150°C mit A2), ggf. A3) und A4) umgesetzt wird, bis der NCO-Gehalt auf den gewünschten Wert gefallen ist. Die Komponenten A2) bis A4) können dabei einzeln in beliebiger Reihenfolge oder als Mischung zugegeben werden. Bevorzugt ist die Zugabe als Mischung. Bevorzugt wird während der Umsetzung der genannten Komponenten ein sauerstoffhaltiges Gas, bevorzugt Luft , durch das Reaktionsmedium geleitet.

Möglich ist auch A2), A3) und A4) vorzulegen und A1) zuzudosieren. Auch erst A2), A3), A4) oder eine Mischung von zwei dieser Komponenten vorzulegen, dann A1) zuzudosieren und schließlich die noch fehlenden Bestandteile A2), A3) und/oder A4) zuzugeben, ist möglich.

Bevorzugt wird A5) unmittelbar nach A4) zugegeben. Falls vorhanden, wird A6), insbesondere wenn Stabilisatoren enthalten sind, zumindest teilweise vor Zugabe von A2) zugegeben. Insbesondere wenn NCO-reaktive Lösemittel eingesetzt werden, ist es zweckmäßig, das Lösungsmittel aus A6) erst dann zuzugeben, wenn alle NCO-Gruppen abreagiert haben oder der NCO-Gehalt unter 1 Gew.% gefallen ist.

Bevorzugt werden pro Equivalent NCO in A1) 0,2 bis 0,8 Equivalente A4), insbesondere 0,3 bis 0,7 Equivalente A4), eingesetzt. Bevorzugt werden pro Equivalent NCO in A1) 0,2 bis 0,8 Equivalente A2), insbesondere 0,3 bis 0,7 Equivalente A2), eingesetzt, wobei sich die Summe der eingesetzten Equivalente der Komponenten A2) und A4) nicht größer als 1 pro NCO-Gruppe aus A1) ist.

Sollen die erfindungsgemäßen Polyisocyanate Bestandteil eines bei Applikation festen Beschichtungsmittels, z.B. eines Pulverlacks, sein, so sollten die erfindungsgemäßen Polyisocyanate entweder amorph mit einer Glasübergangstemperatur von 20 bis 90 °C, insbesondere 30 bis 65 °C, oder kristallin mit einem Schmelzpunkt von 30 bis 130 °C, insbesondere von 60 bis 120 °C bevorzugt sein. Derartige Polyisocyanate werden z.B. durch den Einsatz von Verbindungen mit cycloaliphatischen Struktureinheiten bei der Herstellung der erfindungsmäßen Polyisocyanate erhalten. Bevorzugt werden hierfür cycloaliphatische Diisocyante in Komponente A1) eingesetzt.

Ein weiterer Gegenstand der Erfindung sind Beschichtungsmittel enthaltend
B1) ein oder mehrere erfindungsgemäße Polyisocyanate,
B2) ein oder mehrere Verbindungen, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren,
B3) ggf. Verbindungen, die funktionelle Gruppen tragen, die durch Einwirkung aktinischer Strahlung mit ethylenisch ungesättigten Verbindungen unter Polymerisation reagieren und die weder NCO-Gruppen noch NCO-reaktive Gruppen aufweisen,
B4) ggf. Katalysatoren und
B5) ggf. Hilfs- und Zusatzstoffe

Die Verbindungen der Komponente B2) können monomer, oligomer oder polymer sein und enthalten mindestens eine, bevorzugt zwei oder mehr mit Isocyanaten reaktive Gruppen.

Geeignete Verbindungen der Komponente B2) sind niedermolekulare kurzkettige, d.h. 2 bis 20 Kohlenstoffatome enthaltende aliphatische, araliphatische oder cycloaliphatische Diole oder Triole. Beispiele für Diole sind Ethylenglykol, Diethylenglykol, Triethylenglykol, Tetraethylenglykol, Dipropylenglykol, Tripropylenglykol, 1,2-Propandiol, 1,3-Propandiol, 1,4-Butandiol, Neopentylglykol, 2-Ethyl-2-butylpropandiol, Trimethylpentandiol, stellungsisomere Diethyloctandiole, 1,3-Butylenglykol, Cyclohexandiol, 1,4-Cyclohexandimethanol, 1,6-Hexandiol, 1,2- und 1,4-Cyclohexandiol, hydriertes Bisphenol A (2,2-Bis(4-hydroxycyclohexyl)propan), 2,2-Dimethyl-3-hydroxypropionsäure-(2,2-dimethyl-3-hydroxypropylester). Beispiele geeigneter Triole sind Trimethylolethan, Trimethylolpropan oder Glycerin. Geeignete höherfunktionelle Alkohole sind Ditrimethylolpropan, Pentaerythrit, Dipentaerythrit oder Sorbit.

Geeignet sind auch höhermolekulare Polyole wie Polyesterpolyole, Polyetherpolyole, hydroxyfunktionelle Acrylharze, hydroxyfunktionelle Polyurethane oder entsprechende Hybride (vgl. Römpp Lexikon Chemie, S.465-466, 10. Aufl. 1998, Georg-Thieme-Verlag, Stuttgart).

Zu den Verbindungen der Komponente B2) gehören auch alle bereits unter A2) zusammengefassten Verbindungen und darüber hinaus isocyanatreaktive oligomere oder polymere ungesättigte Acrylat- und/oder Methacrylatgruppen enthaltende Verbindungen alleine oder in Kombination mit den vorgenannten monomeren Verbindungen. Bevorzugt werden dabei hydroxylgruppenhaltige Polyesteracrylate mit einem OH-Gehalt von 30 bis 300 mg KOH/g, bevorzugt 60 bis 200, besonders bevorzugt 70 bis 120 eingesetzt.

Die Herstellung von Polyesteracrylaten wird in DE-A 4 040 290 (S.3, Z. 25 - S.6, Z. 24), DE-A-3 316 592 (S. 5, Z. 14 - S. 11, Z. 30) und P. K. T. Oldring (Ed.), Chemistry & Technology of UV & EB Formulations For Coatings, Inks & Paints, Vol. 2, 1991, SITA Technology, London, S. 123-135 beschrieben.

Ebenfalls in B2) verwendet werden können die an sich bekannten hydroxylgruppenhaltigen Epoxy(meth)acrylate mit OH-Gehalten von 20 bis 300 mg KOH/g, bevorzugt von 100 bis 280 mg KOH/g, besonders bevorzugt von 150 bis 250 mg KOH/g oder hydroxylgruppenhaltige Polyurethan(meth)acrylate mit OH-Gehalten von 20 bis 300 mg KOH/g, bevorzugt von 40 bis 150 mg KOH/g, besonders bevorzugt von 50 bis 100 mg KOH/g sowie deren Mischungen untereinander und Mischungen mit hydroxylgruppenhaltigen ungesättigten Polyestern sowie Mischungen mit Polyester(meth)acrylaten oder Mischungen hydroxylgruppenhaltiger ungesättigter Polyester mit Polyester(meth)acrylaten. Solche Verbindungen werden ebenfalls in P. K. T. Oldring (Ed.), Chemistry & Technology of UV & EB Formulations For Coatings, Inks & Paints, Vol. 2, 1991, SITA Technology, London S. 37-56 beschrieben. Hydroxylguppenhaltige Epoxy-(meth)acrylate basieren insbesondere auf Umsetzungsprodukten von Acrylsäure und/oder Methacrylsäure mit Epoxiden (Glycidylverbindungen) von monomeren, oligomeren oder polymeren Bisphenol-A, Bisphenol-F, Hexandiol und/oder Butandiol oder deren ethoxilierten und/oder propoxilierten Derivaten.

Die Verbindungen der Komponente B3) können von den Verbindungen der Komponente B2) verschiedene Polymere wie Polyacrylate, Polyurethane, Polysiloxane, sowie Verbindungen, die durch Einwirkung aktinischer Strahlung mit ethylenisch ungesättigten Verbindungen unter Polymerisation reagieren, eingesetzt werden. Solche Gruppen sind α,β-ungesättigte Carbonsäurederivate wie Acrylate, Methacrylate, Maleinate, Fumarate, Maleimide, Acrylamide, weiterhin Vinylether, Propenylether, Allylether und Dicyclopentadienyl-Einheiten enthaltende Verbindungen. Bevorzugt sind Acrylate und Metacrylate. Beispiele beinhalten die in der Technologie der Strahlenhärtung bekannten Reaktivverdünner (vgl. Römpp Lexikon Chemie, S.491, 10. Aufl. 1998, Georg-Thieme-Verlag, Stuttgart) oder die in der Technologie der Strahlenhärtung bekannten Bindemittel wie Polyetheracrylate, Polyesteracrylate, Urethanacrylate, Epoxyacrylate, soweit diese einen Gehalt von Hydroxylgruppen unter 30, bevorzugt unter 20, besonders bevorzugt unter 10 mg KOH/g aufweisen.

Beispielhaft seien die Ester der Acrylsäure oder Methacrylsäure als Bestandteil von B3) genannt, bevorzugt der Acrylsäure, der folgenden Alkohole. Einwertige Alkohole sind die isomeren Butanole, Pentanole, Hexanole, Heptanole, Octanole, Nonanole und Decanole, weiterhin cycloaliphatische Alkohole wie Isobornol, Cyclohexanol und alkylierte Cyclohexanole, Dicyclopentanol, arylaliphatische Alkohole wie Phenoxyethanol und Nonylphenylethanol, sowie Tetrahydrofurfurylalkohole. Weiterhin können alkoxylierte Derivate dieser Alkohole verwendet werden. Zweiwertige Alkohole sind beispielsweise Alkohole wie Ethylenglykol, Propandiol-1,2, Propandiol-1,3, Diethylenglykol, Dipropylenglykol, die isomeren Butandiole, Neopentylglykol, Hexandiol-1,6, 2-Ethylhexandiol und Tripropylenglykol oder auch alkoxylierte Derivate dieser Alkohole. Bevorzugte zweiwertige Alkohole sind Hexandiol-1,6, Dipropylenglykol und Tripropylenglykol. Höherwertige Alkohole sind Glycerin, Trimethylolpropan, Ditrimethylolpropan, Pentaerythrit oder Dipentaerythrit oder deren alkoxylierte Derivate.

Als Bestandteil von B4) können zur Beschleunigung der Aushärtung der blockierten Isocyanate mit den jeweiligen wasserstoffenthaltenden Reaktionspartnern wie Alkoholen, Aminen und den gemischt alkohol- und aminhaltigen Reaktionspartnern prinzipiell Lewis Säuren mitverwendet werden. Geeignet sind hierbei mindestens zweiwertige Ionen von Lewis-Säuren. Geeignet sind z.B. Salze des Zinks, des Titans, des Zirkons und des Wismuts. Bevorzugt sind Verbindungen des Zinks- und des Zirkons, wobei Zink-2-ethylhexanoat besonders bevorzugt ist.

Die Menge des Katalysators B4) kann durch den Fachmann den Erfordernissen der Aushärtung angepasst werden, wobei Aushärtetemperatur zu berücksichtigen sind. Geeignete Mengen sind z.B. 0,01 bis 2 Gew.-%, bevorzugt ist die Verwendung von 0,05 bis 1 Gew.-%, besonders bevorzugt ist 0,07 bis 0,6 Gew.-% Katalysator auf gesamt Festkörpergehalt. Sollte bei höheren Einbrenntemperaturen, d.h. ab ca. 160 °C gearbeitet werden, kann auf den Katalysator gegebenenfalls auch verzichtet werden.

Als Komponente B5) können in der Technologie der Lacke, Farben, Druckfarben, Dichtstoffe und Klebstoffe übliche Zusätze oder Hilfsmittel enthalten sein. Dazu gehören auch durch aktinische Strahlung aktivierbare Initiatoren, die eine radikalische Polymerisation der entsprechenden polymerisierbaren Gruppen auslösen. Fotoinitiatoren, die durch UV- oder sichtbares Licht aktiviert werden, sind hierbei bevorzugt. Fotoinitiatoren sind an sich bekannte, kommerziell vertriebene Verbindungen, wobei zwischen unimolekularen (Typ I) und bimolekularen (Typ In Initiatoren unterschieden wird. Geeignete (Typ I)-Systeme sind wie aromatische Ketonverbindungen, z.B. Benzophenone in Kombination mit tertiären Aminen, Alkylbenzophenone, 4,4'-Bis(dimethylamino)benzophenon (Michlers Keton), Anthron und halogenierte Benzophenone oder Mischungen der genannten Typen. Weiter geeignet sind (Typ II)-Initiatoren wie Benzoin und seine Derivate, Benzilketale, Acylphosphinoxide z.B. 2,4,6-Trimethyl-benzoyl-diphenylphosphinoxid, Bisacylphosphinoxide, Phenylglyoxylsäureester, Campherchinon, α -Aminoalkylphenone, α,α-Dialkoxyacetophenone und α-Hydroxyalkylphenone. Soll das erfindungsgemäße Beschichtungsmittel wässrig verarbeitet werden, so finden bevorzugt Fotoinitiatoren Verwendung, die leicht in wässrige Beschichtungsmittel einarbeitbar sind. Solche Produkte sind beispielsweise Irgacure® 500, Irgacure® 819 DW (Fa. Ciba, Lampertheim, DE), Esacure® KIP (Fa. Lamberti, Aldizzate, Italien). Es können auch Gemische dieser Verbindungen eingesetzt werden.

Soll die Härtung der polymerisierbaren Bestandteile zusätzlich thermisch initiiert werden, eignen sich als Verbindungen der Komponente B5) Peroxyverbindungen wie Diacylperoxide z.B. Benzoylperoxid, Alkylhydroperoxid wie Diisopropylbenzolmonohydroperoxid, Alkylperester wie tert.-Butylperbenzoat, Dialkylperoxide wie Di.-tertbutylperoxid, Peroxidicarbonate wie Dicetylperoxiddicarbonat, anorganische Peroxide wie Ammoniumperoxodisulfat, Kaliumperoxodisulfat oder auch Azoverbindungen wie 2,2'-Azobis[N-(2-propenyl)-2-methylpropionamide], 1-[(cyano-1-methylethyl)azo]formamide, 2,2'-Azobis(N-butyl-2-methylpropionamide), 2,2'-Azobis(N-cyclohexyl-2-methylpropionamide), 2,2'-Azobis{2-methyl-N-[2-(1-hydroxybutyl)]propionamide}, 2,2'-Azobis{2-methyl-N-[2-(1-hydroxybutyl)]propionamide}, 2,2'-Azobis-{2-methyl-N-[1,1-bis(hydroxymethyl)-2-hydroxyethyl]-propionamide}, weiterhin auch Benzpinakol sowie dessen silylierten Derivate. Für wässrige Beschichtungssysteme bevorzugt werden Verbindungen, die wasserlöslich sind oder als wässrige Emulsionen vorliegen. Diese Radikalbildner können in bekannter Weise mit Beschleunigern kombiniert werden.

Weiterhin verwendbare Zusätze sind bereits unter A5) beschriebene Stabilisatoren, Lichtschtzmittel wie UV-Absorber und sterisch gehinderte Amine (HALS), weiterhin Antioxidantien, Füllstoffe sowie Lackhilfsmittel, z.B. Antiabsetzmittel, Entschäumungs- und/oder Netzmittel, Verlaufmittel, Reaktivverdünner, Weichmacher, Katalysatoren, Hilfslösemittel und/oder Verdicker sowie Pigmente, Farbstoffe und/oder Mattierungsmittel. Der Einsatz von Lichtschutzmitteln und die verschiedenen Typen sind beispielhaft beschrieben in A. Valet, Lichtschutzmittel für Lacke, Vincentz Verlag, Hannover, 1996.

Die erfindungsgemäßen Polyisocyanate können zur Herstellung von Lacken, Beschichtungen, Schlichten, Klebstoffen, Druckfarben und Formkörpern verwendet werden.

Ein weiterer Gegenstand der Erfindung ist ein Verfahren zur Herstellung der erfindungsgemäßen Beschichtungsmittel, bei dem die Bestandteile des Beschichtungsmittels in beliebiger Reihenfolge bei Temperaturen von -20 bis 120 °C, bevorzugt 10 bis 90 °C, insbesondere 20 bis 60 °C miteinander vermischt werden. Dabei kann das Beschichtungsmittel bei Raumtemperatur fest, flüssig, gelöst oder dispergiert vorliegen. Feste Beschichtungsmittel werden mit den in der Pulverlacktechnik üblichen Geräten, insbesondere mit Extrudern, Mühlen und Sichtern hergestellt.

Für flüssige, gelöste oder dispergierte Beschichtungsmittel eignen sich die dem Fachmann aus der Beschichtungstechnologie flüssiger Systeme bekannten Rührwerke und Dispergiereinrichtungen.

Bevorzugt beträgt das Verhältnis von blockierten Isocyanatgruppen in B1) zu isocyanatreaktiven Gruppen in B2) 0,5 bis 2, insbesondere 0,8 bis 1,5, besonders bevorzugt 1 zu 1.

Die Verbindungen B3) werden ggf. in Mengen bis zu 75 Gew.-%, bevorzugt unter 50 Gew.-% bezogen auf das Beschichtungsmittel und besonders bevorzugt gar nicht eingesetzt.

Die erfindungsgemäßen Beschichtungsmittel lassen sich durch die üblichen Techniken auf unterschiedlichste Substrate applizieren, wie beispielsweise durch Spritzen, Walzen, Rakeln, Gießen, Sprühen, Streichen, Tränken, Tauchen, Drucken oder andere Transfermethoden. Geeignete Substrate sind beispielsweise Holz, Metall, insbesondere auch Metall wie es in den Anwendungen der sogenannten Draht-, Coil-, Can- oder Container-Lackierung verwendet wird, weiterhin Kunststoff, insbesondere ABS, AMMA, ASA, CA, CAB, EP, UF, CF, MF, MPF, PF, PAN, PA, PE, HDPE, LDPE, LLDPE, UHMWPE, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1), Papier, Leder, Textilien, Filz, Glas, elektronische Baugruppen oder mineralische Untergründe. Es können auch Substrate, die aus verschiedenen der vorgenannten Materialien bestehen, oder bereits beschichtete Substrate lackiert werden. Es ist auch möglich die Beschichtungsmittel nur temporär auf ein Substrat aufzubringen, dann teilweise oder vollständig zu härten und wieder abzulösen, um z.B. Folien herzustellen.

Die applizierten Schichtdicken (vor der Härtung) liegen typischerweise zwischen 0,5 und 5000 µm, bevorzugt zwischen 5 und 1500 µm, besonders bevorzugt zwischen 15 und 1000 µm.

Die Strahlungshärtung erfolgt bevorzugt durch Einwirkung energiereicher Strahlung, also UV-Strahlung oder Tageslicht, z.B. Licht der Wellenlänge 200 bis 750 nm, oder durch Bestrahlen mit energiereichen Elektronen (Elektronenstrahlung, 150 bis 300 keV). Als Strahlungsquellen für Licht oder UV-Licht dienen beispielsweise Hochdruckquecksilberdampflampen, wobei der Quecksilberdampf durch Dotierung mit anderen Elementen wie Gallium oder Eisen modifiziert sein kann. Laser, gepulste Lampen (unter der Bezeichnung UV-Blitzlichtstrahler bekannt), Halogenlampen oder Eximerstrahler sind ebenfalls möglich. Die Strahler können ortsunbeweglich installiert sein, so dass das zu bestrahlende Gut mittels einer mechanischen Vorrichtung an der Strahlungsquelle vorbeibewegt wird oder die Strahler können beweglich sein und das zu bestrahlende Gut verändert bei der Härtung seinen Ort nicht. Die üblicherweise zur Vernetzung ausreichende Strahlungsdosis bei UV-Härtung liegt im Bereich von 80 bis 5000 mJ/cm².

Die Bestrahlung kann gegebenenfalls auch unter Ausschluss von Sauerstoff, z.B. unter InertgasAtmosphäre oder Sauerstoff-reduzierter Atmosphäre durchgeführt werden. Als Inertgase eignen sich bevorzugt Stickstoff, Kohlendioxid, Edelgase oder Verbrennungsgase. Des weiteren kann die Bestrahlung erfolgen, indem die Beschichtung mit für die Strahlung transparenten Medien abgedeckt wird. Beispiele hierfür sind z.B. Kunststofffolien, Glas oder Flüssigkeiten wie Wasser.

Je nach Strahlungsdosis und Aushärtungsbedingungen sind Typ und Konzentration des gegebenenfalls verwendeten Initiators in dem Fachmann bekannter Weise zu variieren.

Besonders bevorzugt werden zur Härtung Quecksilberhochdruckstrahler in ortsfesten Anlagen eingesetzt. Fotoinitiatoren werden dann in Konzentrationen von 0,1 bis 10 Gew.-%, besonders bevorzugt 0,2 bis 3,0 Gew.-% bezogen auf den Festkörper der Beschichtung eingesetzt. Zur Härtung dieser Beschichtungen wird bevorzugt eine Dosis von 200 bis 3000 mJ/cm² gemessen im Wellenlängebereich von 200 bis 600 nm verwendet.

Das erfindungsgemäße Beschichtungsmittel härtet weiterhin durch Einwirkung von thermischer Energie. Die thermische Energie kann dabei durch Strahlung, Wärmeleitung und/oder Konvektion in die Beschichtung eingebracht werden, wobei üblicherweise die in der Beschichtungstechnologie gebräuchlichen Infrarot-Strahler, Nahinfrarotstrahler und/oder Öfen zum Einsatz kommen. Durch die Zuführung thermischer Energie wird die Vernetzungsreaktion der cyclischen Ketongruppen mit den Isocyanat-reaktiven Gruppen des Beschichtungsmittels ausgelöst.

Da durch die Einwirkung aktinischer Strahlung und die Erzeugung thermischer Energie zwei unabhängige chemische Mechanismen in Gang gesetzt werden, kann die Reihenfolge aktinische Strahlung/thermische Energie und damit die Reihenfolge; in der die Mechanismen ablaufen, beliebig kombiniert werden. Bevorzugt wird zunächst gegebenenfalls vorhandenes organisches Lösungsmittel und/oder Wasser mit den in der Beschichtungstechnologie üblichen Methoden entfernt. In einer bevorzugten Variante wird anschließend zunächst durch Einwirkung aktinischer Strahlung ganz oder teilweise gehärtet. Unmittelbar danach oder auch später sowie an der räumlich gleichen oder getrennter Stelle kann die thermische Härtung erfolgen. Es ist so zum Beispiel möglich zunächst flexible Beschichtungen zu erzeugen, die eine Verformung des Substrats schadlos überstehen und diese anschließend thermisch weiter zu härten. Es ist so zum Beispiel möglich, ggf. bereits beschichtetes Metall in Form sogenannter Coils zu beschichten und die Beschichtungen zunächst durch Einwirkung von aktinischer Strahlung zu einer flexiblen Beschichtung zu härten. Aus den beschichteten Coils können dann bestimmte Teile durch dem Fachmann bekannte Verfahren wie z.B. Stanzen herausgelöst und mechanisch in eine neue Form gebracht werden, ohne dass die Beschichtung Schaden nimmt und z.B. reißt. Anschließend wird durch thermische Energie die Vernetzungsreaktion der blockierten NCO-Gruppen mit den Isocyanat-reaktiven Gruppen des Beschichtungsmittels ausgelöst, so dass sehr beständige Beschichtungen entstehen, die sich beispielsweise auch als Klarlacke für Automobilkarosserien oder für im Automobilbau verwendete Teile eignen.

In einer weiteren Variante wird zunächst eine Kunststofffolie beschichtet und die Beschichtung durch aktinische Strahlung zu einer blockfesten, aber elastischen Schicht gehärtet. Diese Folie kann später über ein Formteil gezogen und damit verklebt werden. Dieses sogenannte Tiefziehen erfolgt bevorzugt bei erhöhten Temperaturen, wobei während des Ziehvorgangs, an dessen Ende und/oder nach dem Ziehvorgang diejenige Temperatur erreicht wird, die zur Vernetzung der blockierten Isocyanatgruppen mit den isocyanatreaktiven Gruppen des Beschichtungsmittels notwendig ist, so dass die Beschichtung zu einer hochbeständigen Schicht vernetzt.

In einer weiteren Variante ist es auch möglich, zunächst durch thermische Energie zu vernetzen und anschließend die Oberflächen des so entstandenen beschichteten Substrats oder des nur aus dem erfindungsgemäßen Beschichtungsmittel bestehenden Teils durch Einwirken von aktinischer Strahlung bei Temperaturen von 0 bis 300 °C, bevorzugt 23 bis 200 °C, insbesondere von 80 bis 150 °C weiter zu vernetzen. Insbesondere kann es vorteilhaft sein, das dem Fachmann als In-Mould-Coating bekannte Verfahren der thermischen Härtung von Beschichtungen mit einer nachträglichen Vernetzung durch aktinische Strahlung außerhalb der Form zu kombinieren.

### Beispiele:

Alle Prozentangaben sind, soweit nicht anders vermerkt, als Gewichtsprozent (Gew.-%) zu verstehen.

Die Viskositätsmessungen wurden mit einem Kegelplatte Viskosimeter (SM-KP), Viskolab LC3/ISO der Fa. Paar Physica, Ostfildern, DE nach ISO/DIS 3219:1990 durchgeführt.

Die Bestimmung der NCO-Gehalte in % wurde über Rücktitration mit 0,1 mol/l Salzsäure nach Reaktion mit Butylamin vorgenommen, Grundlage DIN EN ISO 11909.

Säurezahl: Angabe mg KOH / g Probe, Titration mit 0,1 mol/l NaOH-Lösung gegen Bromthymolblau (ethanolische Lösung), Farbumschlag von gelb über grün nach blau, Grundlage DIN 3682.

Hydroxylzahl: Angabe in mg KOH / g Probe, Titration mit 0,1 mol/l meth. KOH-Lösung nach kalter Acetylierung mit Essigsäureanhydrid unter Katalyse von Dimethylaminopyridin, Grundlage DIN 53240.

Desmodur® N3600: HDI-Polyisocyanat auf Isocyanuratbasis mit einer Viskosität von 1200 mPas/23°C und einem NCO-Gehalt von 23,4 %, Bayer MaterialScience AG, Leverkusen, DE:

Desmodur® VP LS 2102: HDI-Polyisocyanat auf Allophanat- und Isocyanuratbasis mit einer Viskosität von 300 mPas/23°C und einem NCO-Gehalt von 20,0%, Bayer MaterialScience AG, Leverkusen, DE

Desmodur® LS 2010: HDI-Polyisocyanat auf Isocyanuratbasis mit einer Viskosität von 6000 mPas/20°C und einem NCO-Gehalt von 10,0%, Bayer MaterialScience AG, Leverkusen, DE.

Polyol 1: Desmophen® VP LS 2089: ungesättigtes Polyesterpolyol, 75% in Butylacetat, Bayer MaterialScience AG, Leverkusen, DE.

Irgacure® 184: Hydroxycyclohexylphenylketon, Ciba Spezialitätenchemie, Lampertheim, DE

Darocure® 1173: 2-Hydroxy-2-methyl-1-phenylpropan-1-on, Ciba Spezialitätenchemie, Lampertheim, DE.

### Beispiel 1: Herstellung von PIC 1

In einem 3-Hals-Kolben mit Rückflußkühler und Lufteinleitung (ca. 1 1/h) wurden 254,93g Desmodur® N3600 und 0,022g Dibutylzinndilaurat (DBTL) (Desmorapid® Z, Bayer AG, Leverkusen, DE) vorgelegt und auf 70°C temperiert. Anschließend wurden bei 70°C eine Lösung aus 0,5g 2,6-Di-tert.-butyl-4-methylphenol in 115,00 g Hydroxyethylacrylat zugegeben solange weitergerührt, bis der NCO-Gehalt konstant war. Dann wurde auf 50°C abgekühlt und mit einer Lösung aus 0,5g 2,6-Di-tert.-butyl-4-methylphenol in 91,01 g Acetoacetoxyethylmethacrylat versetzt. Dann wurde so mit 2,72g Zink(2-ethylhexanoat) versetzt, dass die Temperatur 70°C nicht überstieg. Bei dieser Temperatur wurde anschließend so lange weitergerührt bis der NCO-Gehalt < 0,4 % gesunken war. Dann wurden 5,24g Isobutanol zugegeben und für eine Stunde nachgerührt. Nach Abkühlen auf 50°C wurden unter Rühren 2,72 g Paraformaldehyd in 27,2 g Isobutanol und 0,073 g einer 30%-igen methanolischen Natriummethylatlösung zugegeben. Es wurde für 3,5 h nachgerührt und auf Raumtemperatur abgekühlt. Es wurde ein Produkt mit einer Viskosität von 15200 mPas/23°C erhalten.

### Beispiel 2: Herstellung von PIC 2

In einem 3-Hals-Kolben mit Rückflußkühler und Lufteinleitung (ca. 1 1/h) wurden 239,22g Desmodur® N3600 und 0,02g Dibutylzinndilaurat (Desmorapid® Z Bayer AG, Leverkusen, DE) vorgelegt und auf 70°C temperiert. Dann wurde eine Lösung aus 0,5g 2,6-Di-tert.-butyl-4-methylphenol in 86,38g Hydroxypropylacrylat zugetropft und so lange nachgerührt, bis der NCO-Gehalt konstant war. Die Reaktionsmischung wurde auf 40°C abgekühlt und mit einer Lösung aus 0,5g 2,6-Di-tert.-butyl-4-methylphenol in 170,81 g Acetoacetoxyethylmethacrylat versetzt. Dann wurden 0,05g Zink(2-ethylhexanoat) innerhalb einer Stunde so langsam zu getropft, dass die Temperatur dabei 50°C nicht überstieg und anschließend wurde so lange weitergerührt bis der NCO-Gehalt nur noch 1 % betrugt. Dann wurden weitere 28,46 g Acetoacetoxyethylmethacrylat hinzugegeben und weitergerührt bis NCO-Gehalt < 0,4 % gefallen war. Abschließend wurden noch 2,64 g Dibutylphosphat zugegeben. Es wurde ein Produkt mit einer Viskosität von 25000 mPas/23°C erhalten.

### Beispiel 3: Herstellung von PIC 3

In einem 3-Hals-Kolben mit Rückflußkühler und Lufteinleitung (ca. 1 1/h) wurden 259,39 g Desmodur® VP LS 2102 und 0,02g Dibutylzinndilaurat (Desmorapid® Z Bayer AG, Leverkusen, DE) vorgelegt und auf 70°C temperiert. Dann wurde bei 70°C eine Lösung aus 0,5 g 2,6-Di-tert.-butyl-4-methylphenol in 80,29 g Hydroxypropylacrylat zugetropft und so lange weitergerührt, bis der NCO-Gehalt konstant war. Dann wurde auf 40°C abgekühlt und mit einer Lösung aus 0,5g 2,6-Di-tert.-butyl-4-methylphenol in 158,75 g Acetoacetoxyethylmethacrylat versetzt. Nun wurden 0,05g Zink(2-ethylhexanoat) innerhalb einer Stunde langsam zugetropft, wobei, die Temperatur 50°C nicht überschreiten durfte. Anschließend wurde weitergerührt bis der NCO-Gehalt < 0,4% betrug. Abschließend wurden noch 0,50 g Dibutylphosphat zugegeben. Es wurde ein Produkt mit einer Viskosität von 7800 mPas/23°C erhalten.

### Beispiel 4: Herstellung von PIC 4

In einem 3-Hals-Kolben mit Rückflußkühler und Lufteinleitung (ca. 1 1/h) wurden 330,83 g Desmodur® LS 2010 und 0,02 g Dibutylzinndilaurat (Desmorapid® Z, Bayer AG, Leverkusen, DE) vorgelegt und auf 70°C temperiert. Dann wurde eine Lösung aus 0,5g 2,6-Di-tert.-butyl-4-methylphenol in 56,29 g Hydroxypropylacrylat zugetropft und solange weitergerührt, bis der NCO-Gehalt konstant war. Dann wurde auf 40°C abgekühlt und mit einer Lösung aus 0,5 g 2,6-Di-tert.-butyl-4-methylphenol gelöst in 111,30 g Acetoacetoxyethylmethacrylat zugegeben. Danach wurden 0,05 g Zink(2-ethylhexanoat) innerhalb einer Stunde so langsam zugetropft, dass die Temperatur 50°C nicht überstieg und solange weitergerührt bis der NCO-Gehalt < 0,4% war. Abschließend wurden noch 0,50 g Dibutylphosphat zugegeben. Es wurde ein Produkt mit einer Viskosität von 47200 mPas/23°C erhalten.

### Beispiel 5: Herstellung von Polyol 1

In einem Druckkesselreaktor aus V4A-Stahl wurden 1200 g Butylacetat vorgelegt und auf 155°C (Innendruck des Reaktors ca. 2,7 bar) aufgeheizt. Innerhalb von 3h wurde dann eine Lösung aus 924,0 g Glycidylmethacrylat, 805,2 g Methylmethacrylat und 818,4 g n-Butylacrylat eindosiert. Gleichzeitig wurde über 3,5 h eine Lösung aus 92,4 g Di-tert.-butylperoxid (Peroxan® DB, Pergan GmbH, Bocholt, DE) in 160 g Butylacetat eindosiert. Es wurde eine Stunde weitergerührt, auf 40°C abgekühlt und schließlich über einen Tiefenfilter T5500 (Seitz-Filter-Werke, Bad Kreuznach, DE) filtriert.

### Beispiel 6: Herstellung von Polyol 2

In einem Dreihalskolben mit Rückflußkühler, Rührer und Gaseinleitungsrohr wurden 175,93 g des Produkts aus Beispiel 5, 18,56 g Acrylsäure, 0,197 g Zinn-2-Ethylhexoat (Desmorapid® SO, Bayer AG Leverkusen, DE), 0,39 g 2,6-Di-tert.-butyl-4-methylphenol, 1,96 mg 2,2,6,6-Tetramethylpiperidin-1-oxyl und 4,91 g Butylacetat vorgelegt und unter Stickstoffeinleitung auf 90°C erwärmt und für 22h umgesetzt. Dabei wurde ein Produkt mit einer Viskosität von 1130 mPas/23°C, einer OH-Zahl von 88,7 mg KOH/g und einer Säurezahl von 6,2 mg KOH/g erhalten.

### Beispiel 7:

### Anwendungsbeispiele der erfindungsgemäßen Formulierungen:

| | 7a | 7b | 7c | 7d | 7e |
|---|---|---|---|---|---|
| PIC 1 | 16,12 g | | | | 16,12 g |
| PIC 2 | | 13,78 g | | | |
| PIC 3 | | | 14,09 g | | |
| PIC 4 | | | | 15,45 g | |
| Polyol 1 | 3,88 g | 6,22 g | 5,91 g | 4,55 g | 3,88 g |
| Polyol 2 | | | | | |
| Irgacure®184 | 0,6 g | 0,6 g | 0,6 g | 0,6 g | |
| Darocur® 1173 | | | | | 0,6 g |
| | | | | | |

| | 7f | 7g | 7h | 7i | 7j |
|---|---|---|---|---|---|
| PIC 1 | 13,78 g | 13,01 g | | | |
| PIC 2 | | | 9,96 g | | |
| PIC 3 | | | | 10,33 g | |
| PIC 4 | | | | | 12,07 g |
| Polyol 1 | 3,88 g | | | | |
| Polyol 2 | | 6,99 g | 10,04 g | 9,67 g | 7,93 g |
| Irgacure® 184 | | 0,6 g | 0,6 g | 0,6 g | 0,6 g |
| Darocur® 1173 | 0,6 g | | | | |

Gemäß der vorstehenden Tabellen wurden die erfindungsgemäßen Formulierungen durch Verrühren der Komponenten miteinander hergestellt und auf eine Glasplatte mit einem Spiralrakel appliziert (Schichtdicke ca. 60µm). Nach einer Ablüftphase von 20 Minuten bei 25°C wurde auf drei verschiedene Verfahren gehärtet:

Prozess A: Belichtung mit UV (Bandanlage, 1 Strahler, Quecksilberhochdruckstrahler 80 W/cm Lampenlänge [CK-Strahler, IST, Metzingen, DE], zwei mal bestrahlt mit einer Bandgeschwindigkeit von 5m/min).

Prozess B: Erwärmung der beschichteten Gasplatte in einem Konvektionsofen 20 Min./140°C

Prozess C: Anwendung des Prozesses A dann des Prozesses B.

Nach dem Erkalten wurde manuell geprüft, ob die Beschichtung klebrig, weich (Fingerabdruck noch sichtbar) oder hart ist. Zusätzlich wurde die Pendelhärte nach König (DIN 53157) bestimmt und die Chemikalienbeständigkeit mit 100 Doppelhüben bestimmt. Dabei wurde jeweils ein mit Methylethylketon (MEK) getränkter Wattebausch mit einer Kraft von ca. einem Kilo über die Oberflächen hin und her bewegt bis eine Beeinträchtigung des Lackfilms (Trübung oder Ablösung vom Substrat) sichtbar wurde (maximal 100 Doppelhübe).

### Ergebnisse der Härtung nach Prozessen A-C:

| | Haptik nach | | | Pendelhärte nach | | | MEK-Doppelhübe nach | | |
|---|---|---|---|---|---|---|---|---|---|
| | A | B | C | A | B | C | A | B | C |
| 7a | Hart | klebrig | hart | 112s | - | 187s | > 100 | - | > 100 |
| 7b | Weich | hart | hart | 70s | 137s | 193s | >100 | >100 (-) | >100 |
| 7c | Weich | klebrig | hart | 32s | - | 148s | >100 (-) | - | >100 |
| 7d | Weich | klebrig | weich | 14s | - | 30s | >100 (-) | - | >100 (-) |
| 7e | Hart | klebrig | hart | 96s | - | 188s | >100 | - | >100 |
| 7f | Hart | hart | hart | 63s | 84s | 188s | >100 | >100 | >100 |
| 7g | Hart | weich | hart | 96s | 6s | 177s | >100 | 10 | >100 |
| 7h | Weich | hart | hart | 115s | 195s | 188s | >100 (-) | >100 | >100 |
| 7i | Weich | hart | hart | 113s | 197s | 173s | >100 (-) | >100(-) | >100 |
| 7j | Weich | weich | hart | 48s | 96s | 88s | 50-70 | 40 | 80 |

>100: bei 100 Doppelhüben war keine Beeinträchtigung des Lackfilms zu erkennen >100 (-): nach 100 Doppelhüben war die Filmoberfläche angegriffen

Die Formulierungen 7a-7j waren bei 23 °C im geschlossenen Gefäß >8 h zu verarbeiten, d.h. die mit Butylacetat auf Spritzviskosität (25 s Auslaufzeit im DIN4-Becher) verdünnten Formulierungen zeigten mindestens nach 8 h Lagerung noch eine Auslaufzeit unter 50 s.

Es ist zu erkennen, dass der Härtungsmechanismus A) zu einer Teilhärtung der Beschichtungen führt, das B) ebenfalls in den meisten Fällen zu einer Härtung führt, aber erst die Kombinationshärtung C) zur vollständigen Aushärtung führt. Die Formulierungen weisen eine Verarbeitungszeit auf, die deutlich über der eines Dual Systems mit freien Isocyanatgruppen (Vergleichsbeispiel 10) liegt.

### Beispiel 8:

Gemäß nachstehender Tabelle wurden analog zu Beispiel 7 Beschichtungen hergestellt, diese nach den Prozessen A, B oder C ausgehärtet und deren Stabilität gegen MEK getestet. Im Gegensatz zu Beispiel 7 wurde hier DBU als Katalysator für die Deblockierung als gleichzeitige Initiierung der thermischen Vernetzung zugesetzt.

| | 8a | 8b | 8c | 8d |
|---|---|---|---|---|
| PIC 2 | 13,78 | 13,78 g | 13,78 g | 13,78 g |
| Polyol 1 | 6,22 | 6,22 g | 6,22 g | 6,22 g |
| DBU | | 0,0206 g | 0,103 g | 0,206 |
| Irgacure® 184 | 0,6 g | 0,6 g | 0,6 g | 0,6 g |
| Worlee Add-101 | 0,2 g | 0,2 g | 0,2 g | 0,2 g |

DBU = 1,8-Diazabicyclo(5,4,0)undec-7-en
- Worlee Add 101:: Verlaufshilfsmittel auf Polyacrylatbasis der Worlee-Chemie GmbH, Lauenburg, DE

### Ergebnisse der Härtung nach Prozessen A-C:

| | Haptik | | | Pendelhärte nach | | | MEK-Doppelhübe | | |
|---|---|---|---|---|---|---|---|---|---|
| | A | B | C | A | B | C | A | B | C |
| 8a | weich | hart | hart | 91s | 103s | 191s | >100 (-) | >100 (-) | >100 |
| 8b | weich | weich | hart | 87s | 46s | 183s | >100 | >100 (-) | >100 |
| 8c | weich | weich | hart | 86s | 33s | 191s | >100 (-) | >100 (-) | >100 |
| 8d | weich | weich | hart | 61s | 73s | 185s | >100 (-) | >100 (-) | >100 |

>100: bei 100 Doppelhüben war keine Beeinträchtigung des Lackfilms zu erkennen
>100 (-): nach 100 Doppelhüben war die Filmoberfläche angegriffen

Es ist zu erkennen, dass die Katalyse die Härtung nach Verfahren B) gegenüber Beispiel 7 verbessert. Jede Härtung thermisch oder UV alleine [B) oder A)] führen nur zur teilweisen Aushärtung. Nur die Kombination führt zu optimalen Eigenschaften.

### Beispiel 9:

Gemäß nachstehender Tabelle wurden die Formulierungen hergestellt und zur Beurteilung der Topfzeit (Pot-Life) bei Raumtemperatur oder 60°C gelagert.

| | 9a | 9b | 9c |
|---|---|---|---|
| PIC 2 | 13,78 g | 13,78 g | 13,78 g |
| Polyol 1 | 6,22 g | 6,22 g | 6,22 g |
| DBU | 0,0206 g | 0,103 g | 0,206 |
| Darocur® 1173 | 0,6 g | 0,6 g | 0,6 g |

DBU = 1,8-Diazabicyclo(5,4,0)undec-7-en

### Topfzeit/Pot-Life der Formulierungen 9a-c:

| | 1 h | 5 h | 3 Tage | 6 Tage | 14 Tage |
|---|---|---|---|---|---|
| 9a bei RT | o.B. | o.B. | o.B. | o.B. | o.B. |
| 9b bei RT | o.B. | o.B. | o.B. | o.B. | o.B. |
| 9c bei RT | o.B. | o.B. | Trübung | Trübung | starke Trübung |
| 9a bei 60°C | o.B. | o.B. | fest | fest | fest |
| 9b bei 60°C | o.B. | o.B. | fest | fest | fest |
| 9c bei 60°C | o.B. | o.B. | fest | fest | fest |

o.B.: ohne Befund, keine Veränderung erkennbar

Da hier wie in Beispiel 8 DBU als Katalysator für die thermische Vernetzung zugegen ist, besitzen die Lackformulierungen keine "unbegrenzte" Lagerstabilität wie in Beispiel 7 mehr. Trotz Zugabe des Katalysators sind die Formulierungen mehr als 5 Stunden bei RT und bei 60 °C lagerstabil. Die Verarbeitungszeit liegt deutlich über dem eines Dual Systems mit freien Isocyanatgruppen (Vergleichsbeispiel 10).

### Vergleichsbeispiel 10:

Das Dual Cure System mit freien Isocyanatgruppen aus Beispiel 2 der EP-A 928 800 wurde nachgestellt. Die Formulierung wurde mit Methoxypropylacetat auf Spritzviskosität (25 s Auslaufzeit im 4 mm DIN-Becher) eingestellt und die Zeit, bis zur Verdoppelung der Auslaufzeit wurde bestimmt. Nach 5,5 h betrug die Auslaufzeit 50 s.

Dual Cure Systeme mit freien Isocyanatgruppen weisen üblicherweise Verarbeitungszeiten von unter 8 h auf.

## Patentansprüche

1. Polyisocyanate, die
A) ggf. eine oder mehrere unter Einwirkung aktinischer Strahlung mit ethylenisch ungesättigten Verbindungen unter Polymerisation reagierende Gruppe (strahlenhärtende Gruppe) aufweisen und
B) mindestens eine thermisch reversibel blockierte NCO-Gruppe aufweisen, deren Blockierungsmittel mindestens eine unter Einwirkung aktinischer Strahlung mit ethylenisch ungesättigten Verbindungen unter Polymerisation reagierende Gruppe (strahlenhärtende Gruppe) aufweist.

2. Verfahren zur Herstellung von Polyisocyanaten gemäß Anspruch 1, bei dem
A1) ein oder mehrere organische Polyisocyanate mit
A2) ggf. einer oder mehreren Verbindungen, die mindestens eine isocyanatreaktive Gruppe aufweisen und mindestens eine unter Einwirkung aktinischer Strahlung mit ethylenisch ungesättigten Verbindungen unter Polymerisation reagierende Gruppe (strahlenhärtende Gruppe) enthalten,
A3) ggf. weiteren von den Verbindungen der Komponente A2) verschiedenen isocyanatreaktiven Verbindungen und
A4) einer Blockierungsmittelkomponente, die wenigstens ein Blockierungsmittel enthält, dass NCO-Gruppen thermisch reversibel blockiert und gleichzeitig mindestens eine unter Einwirkung aktinischer Strahlung mit ethylenisch ungesättigten Verbindungen unter Polymerisation reagierende Gruppe (strahlenhärtende Gruppe) aufweist
A5) ggf. in Anwesenheit eines oder mehrerer Katalysatoren und
A6) ggf. Lösemitteln, Reaktiwerdünnern und/oder Hilfs- und Zusatzstoffen
miteinander umgesetzt werden.

3. Verfahren zur Herstellung von Polyisocyanaten gemäß Anspruch 2, **dadurch gekennzeichnet, dass** in A1) Polyisocyanate oder Polyisocyanatgemische mit ausschließlich aliphatisch und/oder cycloaliphatisch gebundenen Isocyanatgruppen eingesetzt werden.

4. Verfahren zur Herstellung von Polyisocyanaten gemäß Anspruch 2 oder 3, **dadurch gekennzeichnet, dass** in A2) Acrylate, Methacrylate, Maleinate, Fumarate, Maleimide, Acrylamide, Vinylether, Propenylether, Allylether und/oder Dicyclopentadienyl-Einheiten enthaltende Verbindungen eingesetzt werden, die mindestens eine gegenüber Isocyanaten reaktive Gruppe aufweisen.

5. Verfahren zur Herstellung von Polyisocyanaten gemäß einem der Ansprüche 2 bis 4, **dadurch gekennzeichnet, dass** in A4) Acetessigsäure-(meth)acryloyl-oxyethylester, Acetessigsäure-(meth)acryloyloxypropyloster und/oder Acet-essigsäure-(meth)acryloyloxybutylester eingesetzt werden.

6. Verwendung von Polyisocyanaten gemäß Anspruch 1, die bei der Herstellung von Lacken, Beschichtungen, Schlichten, Klebstoffen, Druckfarben und Formkörpern verwendet werden.

7. Beschichtungsmittel enthaltend
B1) ein oder mehrere Polyisocyanate gemäß Anspruch 1,
B2) ein oder mehrere Verbindungen, die mindestens eine isocyanatreaktive Gruppe aufweisen und ggf. eine oder mehrere funktionelle Gruppen enthalten, die unter Einwirkung aktinischer Strahlung mit ethylenisch ungesättigten Verbindungen unter Polymerisation reagieren,
B3) ggf. Verbindungen, die funktionelle Gruppen tragen, die durch Einwirkung aktinischer Strahlung mit ethylenisch ungesättigten Verbindungen unter Polymerisation reagieren und die weder NCO-Gruppen noch NCO-reaktive Gruppen aufweisen,
B4) ggf. Katalysatoren und
B5) ggf. Hilfs- und Zusatzstoffe

8. Substrate beschichtet mit Beschichtungen erhältlich aus Polyisocyanaten gemäß Anspruch 1.

## Claims

1. Polyisocyanates which
A) comprise optionally one or more than one group which on exposure to actinic radiation reacts, with polymerization, with ethylenically unsaturated compounds (radiation-curing group) and
B) comprise at least one thermally reversibly blocked NCO group whose blocking agent contains at least one group which on exposure to actinic radiation reacts, with polymerization, with ethylenically unsaturated compounds (radiation-curing group).

2. Process for preparing the polyisocyanates according to Claim 1, which involves reacting with one another
A1) one or more organic polyisocyanates with
A2) optionally one or more compounds which comprise at least one isocyanate-reactive group and contain at least one group which on exposure to actinic radiation reacts, with polymerization, with ethylenically unsaturated compounds (radiation-curing group),
A3) optionally further isocyanate-reactive compounds other than the compounds of component A2), and
A4) a blocking agent component comprising at least one blocking agent that thermally reversibly blocks NCO groups and at the same time comprises at least one group which on exposure to actinic radiation reacts, with polymerization, with ethylenically unsaturated compounds (radiation-curing group)
A5) optionally in the presence of one or more catalysts and
A6) optionally solvents, reactive diluents and/or auxiliaries and additives.

3. Process for preparing polyisocyanates according to Claim 2, **characterized in that** in A1) polyisocyanates or polyisocyanate mixtures having exclusively aliphatically and/or cycloaliphatically attached isocyanate groups are used.

4. Process for preparing polyisocyanates according to Claim 2 or 3, **characterized in that** in A2) acrylates, methacrylates, maleates, fumarates, maleimides, acrylamides, vinyl ethers, propenyl ethers, allyl ethers and/or compounds containing dicyclopentadienyl units are used which contain at least one isocyanate-reactive group.

5. Process for preparing polyisocyanates according to one of Claims 2 to 4, **characterized in that** in A4) (meth)acryloyloxyethyl acetoacetate, (meth)acryloyloxypropyl acetoacetate and/or (meth)acryloyloxybutyl acetoacetate are used.

6. Use of polyisocyanates according to Claim 1 in the preparation of paints, coatings, sizes, adhesives, printing inks and shaped articles.

7. Coating materials comprising
B1) one or more polyisocyanates according to Claim 1,
B2) one or more compounds comprising at least one isocyanate-reactive group and containing optionally one or more functional groups which on exposure to actinic radiation react, with polymerization, with ethylenically unsaturated compounds,
B3) optionally compounds which carry functional groups which on exposure to actinic radiation react, with polymerization, with ethylenically unsaturated compounds and which contain neither NCO groups nor NCO-reactive groups,
B4) optionally catalysts and
B5) optionally auxiliaries and additives.

8. Substrates coated with coatings obtainable from polyisocyanates according to Claim 1.

## Revendications

1. Polyisocyanates, qui présentent
A) le cas échéant un ou plusieurs groupe(s) réagissant avec polymérisation sous l'effet d'un rayonnement actinique avec des composés éthyléniquement insaturés (groupe(s) durcissant sous l'effet de rayons) et
B) au moins un groupe NCO bloqué de manière thermiquement réversible, dont l'agent de blocage présente au moins un groupe réagissant avec polymérisation sous l'effet d'un rayonnement actinique avec des composés éthyléniquement insaturés (groupe durcissant sous l'effet de rayons).

2. Procédé pour la préparation de polyisocyanates selon la revendication 1, dans lequel on transforme, les uns avec les autres,
A1) un ou plusieurs polyisocyanates organiques avec
A2) le cas échéant un ou plusieurs composés, qui présentent au moins un groupe réactif avec isocyanate et au moins un groupe réagissant avec polymérisation sous l'effet d'un rayonnement actinique avec des composés éthyléniquement insaturés (groupe durcissant sous l'effet de rayons),
A3) le cas échéant d'autres composés réactifs avec isocyanate différents des composés du composant A2) et
A4) un composant de type agent de blocage, qui contient au moins un agent de blocage, qui bloque les groupes NCO de manière thermiquement réversible et qui présente simultanément au moins un groupe réagissant avec polymérisation sous l'effet d'un rayonnement actinique avec des composés éthyléniquement insaturés (groupe durcissant sous l'effet de rayons),
A5) le cas échéant en présence d'un ou de plusieurs catalyseurs et
A6) le cas échéant des solvants, des diluants réactifs et/ou des adjuvants et des additifs.

3. Procédé pour la préparation de polyisocyanates selon la revendication 2, **caractérisé en ce qu'**on utilise, dans A1), des polyisocyanates ou des mélanges de polyisocyanates présentant exclusivement des groupes isocyanate liés aliphatiquement et/ou cycloaliphatiquement.

4. Procédé pour la préparation de polyisocyanates selon la revendication 2 ou 3, **caractérisé en ce qu'**on utilise, dans A2), des acrylates, des méthacrylates, des maléinates, des fumarates, des maléimides, des acrylamides, des vinyléthers, des propényléthers, des allyléthers et/ou des composés contenant des unités dicyclopentadiényle, qui présentent au moins un groupe réactif par rapport aux isocyanates.

5. Procédé pour la préparation des polyisocyanates selon l'une quelconque des revendications 2 à 4, **caractérisé en ce qu'**on utilise, dans A4), l'ester (méth)acryloyloxyéthylique de l'acide acétoacétique, l'ester (méth)acryloyloxypropylique de l'acide acétoacétique et/ou l'ester (méth)acryloyloxybutylique de l'acide acétoacétique.

6. Utilisation des polyisocyanates selon la revendication 1, qui sont utilisés lors de la production de laques, de revêtements, de colles, d'adhésifs, d'encres d'imprimerie et de corps façonnés.

7. Agents de revêtement, contenant
B1) un ou plusieurs polyisocyanates selon la revendication 1,
B2) un ou plusieurs composés, qui présentent au moins un groupe réactif avec isocyanate et le cas échéant un ou plusieurs groupes fonctionnels réagissant avec polymérisation sous l'effet d'un rayonnement actinique avec des composés éthyléniquement insaturés,
B3) le cas échéant des composés qui portent des groupes fonctionnels qui réagissent avec polymérisation sous l'effet d'un rayonnement actinique avec des composés éthyléniquement insaturés et qui ne présentent pas de groupes NCO ni de groupes réactifs avec NCO,
B4) le cas échéant des catalyseurs et
B5) le cas échéant des adjuvants et des additifs.

8. Substrats revêtus par des revêtements pouvant être obtenus à partir de polyisocyanates selon la revendication 1.
